Europäisches Patentamt

**European Patent Office**

Office européen des brevets

(19)

(11) Veröffentlichungsnummer **0 011 088**
**B1**

(12) EUROPÄISCHE PATENTSCHRIFT

(45) Veröffentlichungstag der Patentschrift:
04.11.81

(51) Int. Cl.³: **B 60 K 41/06**

(21) Anmeldenummer: 79102815.2

(22) Anmeldetag: 06.08.79

(54) Verfahren zur Beeinflussung einer Brennkraftmaschine und Vorrichtung zur Durchführung des Verfahrens.

(30) Priorität: 09.11.78 DE 2848624

(43) Veröffentlichungstag der Anmeldung:
28.05.80 Patentblatt 80/11

(45) Bekanntmachung des Hinweises auf die Patenterteilung:
04.11.81 Patentblatt 81/44

(84) Benannte Vertragsstaaten:
DE FR GB IT

(56) Entgegenhaltungen:
DE-A-2 109 620
DE-A-2 163 979
FR-A-2 385 902
DE-B-1 080 415
DE-B-1 480 177
DE-B-1 626 427
FR-A-1 524 354
GB-A-929 621

(73) Patentinhaber: ROBERT BOSCH GMBH, Postfach 50,
D-7000 Stuttgart 1 (DE)

(72) Erfinder: Heess, Gerhard, Dr.-Ing., Heinestrasse 33,
D-7000 Stuttgart (DE)
Erfinder: Schwab, Manfred, Dr. Dipl-Phys.,
Hallstadtweg 1, D-7016 Gerlingen (DE)
Erfinder: Stroh, Walter, Winterweg 7, D-7121 Cleebronn
(DE)

(74) Vertreter: Witte, Alexander, Dr.-Ing.,
Robert-Bosch-Platz 1 c/o Robert Bosch GmbH,
D-7016 Gerlingen-Schillerhöhe (DE)

BUNDESDRUCKEREI BERLIN

Verfahren zur Beeinflussung einer Brennkraftmaschine und Vorrichtung zur Durchführung des Verfahrens

## Stand der Technik

Die Erfindung geht aus von einem Verfahren nach der Gattung des Hauptanspruches.

Bei Kraftfahrzeugen mit Brennkraftmaschine, denen ein automatisches Stufengetriebe nachgeschaltet ist, ist es bekannt, den sich beim Umschalten des Stufengetriebes einstellenden Schaltdruck dadurch zu vermindern, daß das Drehmoment der Brennkraftmaschine während des Umschaltvorganges reduziert wird.

In der GB-PS 929 621 ist beispielsweise eine Vorrichtung beschrieben, bei der durch Umschaltsignale für das Hochschalten monostabile Kippstufen betätigt werden, die eine zeitweilige Schließung der Drosselklappe bewirken.

Aus der DE-PS 10 80 415 ist es bekannt, eine Steuervorrichtung für das automatische Getriebe, die die Form einer Schaltwalze hat, vorzusehen, wobei mit der Steuervorrichtung mechanisch ein Schalter verbunden ist, der bei bestimmten Stellungen der Schaltwalze über ein Relais und einen Elektromagneten ein auf die Drosselklappe des Motors oder die Zündanlage einwirkendes Gestänge bewegt.

In der DE-OS 14 80 177 ist eine Vorrichtung beschrieben, bei der durch den Schaltbefehl elektromechanisch eine Sperrklinke betätigt wird, die eine Verriegelung der Kraftstoffzufuhr für die Dauer des Schaltvorganges bis zur Herstellung des Synchronlaufes der Getriebeteile bewirkt.

Aus der DE-AS 16 26 427 ist es bekannt, die Drehzahl der Brennkraftmaschine beim Umschalten des Stufengetriebes durch Verstellung der Zündung zu vermindern. Hierzu ist eine zu Beginn des Schaltens wirksam werdende Verzögerungsvorrichtung für die Erzeugung der Zündimpulse vorgesehen, die eine Spätzündung bewirkt.

In der FR-PS 1 524 354 ist eine Vorrichtung beschrieben, bei der ein Zeitglied während des Umschaltens des Stufengetriebes für eine vorgegebene Zeit den Einspritzvorgang unterbricht.

In ähnlicher Weise ist es aus der DE-AS 21 09 620 bekannt, zusammen mit der Betätigung des den Gangwechsel bewirkenden Magnetventils, jedoch gegenüber diesem verzögert, eine Schaltung zur Unterbrechung der Einspritzung in Betrieb zu setzen.

Aus der DE-AS 21 63 979 ist es schließlich bekannt, beim Hochschalten des automatischen Stufengetriebes das Hochschaltsignal zu differenzieren und mit dem differenzierten Hochschaltsignal auf eine Rechenschaltung derart einzuwirken, daß die Breite der Einspritzimpulse während des Umschaltvorganges verringert wird.

Diese bekannten Vorrichtungen zur Reduktion des Motordrehmomentes beim Umschaltvorgang haben den gemeinsamen Nachteil, daß die Stellgröße für die Kraftstoffzumessung bzw. die Zündanlage der Brennkraftmaschine entweder während des gesamten Umschaltvorganges wirksam wird oder — durch eine Zeitsteuerung — für eine fest vorgegebene Zeit. Hierbei wird nicht berücksichtigt, daß Schaltvorgänge aufgrund unterschiedlicher Schaltbedingungen, Gangwechsel, des Getriebezustandes usf. eine sehr unterschiedliche Zeit in Anspruch nehmen können. Durch eine feste zeitliche Einstellung der Beeinflussung der Brennkraftmaschine ist dabei keine optimale Reduktion des Motordrehmomentes im Sinne einer Schaltdruckreduzierung gewährleistet.

## Vorteile der Erfindung

Das erfindungsgemäße Verfahren mit den kennzeichnenden Merkmalen des Hauptanspruches hat demgegenüber den Vorteil, durch Steuerung des Beginnes und Endes der Motorbeeinflussung in Abhängigkeit von der Motordrehzahl eine optimale Anpassung an den jeweiligen Schaltvorgang zu ermöglichen. Hierdurch wird beispielsweise bei Rückschaltungen verhindert, daß die Brennkraftmaschine mit vollem Moment gegen den Freilauf läuft und damit einen stark spürbaren Ruck erzeugt. Andererseits soll jedoch möglichst schnell die Synchrondrehzahl erreicht werden, weswegen die Beeinflussung der Brennkraftmaschine erst kurz vor Erreichen der Synchrondrehzahl einsetzen kann. Durch eine Steuerung der Beeinflussung der Brennkraftmaschine in Abhängigkeit von der Motordrehzahl können in diesem Falle die Einsatzpunkte exakt gesteuert werden.

## Zeichnung

Ausführungsbeispiele der Erfindung sind in der Zeichnung dargestellt und in der nachfolgenden Beschreibung näher erläutert. Es zeigt

Fig. 1 einen ersten Verlauf der Motordrehzahl bei einem Hochschaltvorgang;

Fig. 2 einen zweiten Verlauf der Motordrehzahl bei einem Rückschaltvorgang;

Fig. 3 das Flußdiagramm einer ersten Ausführungsform des erfindungsgemäßen Verfahrens;

Fig. 4 das Flußdiagramm einer zweiten Ausführungsform des erfindungsgemäßen Verfahrens;

Fig. 5 das Prinzipschaltbild einer Ausführungsform einer Vorrichtung zur Durchführung des erfindungsgemäßen Verfahrens;

Fig. 6 eine schematische Darstellung einer ersten Speicherplatzbelegung;

Fig. 7 eine schematische Darstellung einer zweiten Speicherplatzbelegung.

Beschreibung der Ausführungsbeispiele

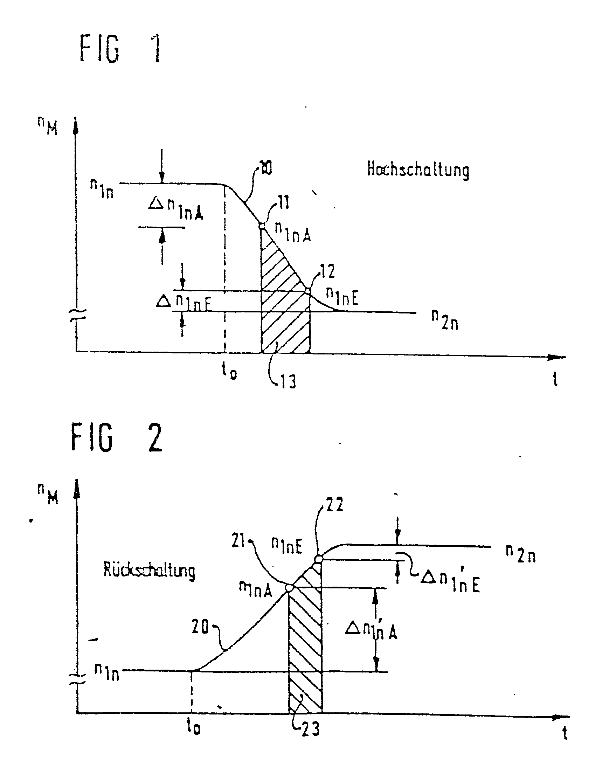

Fig. 1 zeigt den Verlauf der Motordrehzahl $n_M$ in Abhängigkeit von der Zeit t für einen Hochschaltvorgang. Zu Beginn des Schaltvorganges zum Zeitpunkt $t_0$ hat die Motordrehzahl $n_M$ den Betrag $n_{1n}$. Der Index »1« weist dabei darauf hin, daß es sich um die Anfangsdrehzahl zu Beginn des Umschaltvorganges handelt; der Index »n« weist auf einen bestimmten Betrag der Motordrehzahl hin. Wie weiter unten gezeigt wird, ist es zweckmäßig, die Motordrehzahl $n_M$ digital zu verarbeiten und den einzelnen Motordrehzahl-Werten Speicherplätze in einem Digitalspeicher zuzuordnen. Der Index »n« gibt dabei eine Aussage über die Adresse, die der jeweiligen Motordrehzahl $n_M$ zugeordnet ist. Die Enddrehzahl nach Beendigung des Umschaltvorganges beträgt entsprechend $n_{2n}$. Der Index »2« deutet dabei darauf hin, daß es sich um die Enddrehzahl handelt. Erfindungsgemäß werden nun in Abhängigkeit von der Anfangsdrehzahl $n_{1n}$ Brennkraftmaschinen-Drehzahlwerte $n_{1nA}$ und $n_{1nE}$ festgelegt, die auf dem in Fig. 1 dargestellten Verlauf 10 der Motordrehzahl $n_M$ den Punkten 11 bzw. 12 entsprechen. Diese Punkte 11, 12 bezeichnen den Anfang bzw. das Ende der Beeinflussung der Brennkraftmaschine während des Umschaltvorganges und definieren damit einen Bereich 13 für die Beeinflussung. Nach einer ersten Ausführungsform des erfindungsgemäßen Verfahrens können die Brennkraftmaschinen-Drehzahlwerte $n_{1nA}$ bzw. $n_{1nE}$ direkt aus der Anfangsdrehzahl $n_{1n}$ ermittelt werden. Entsprechend einer anderen Ausführungsform des erfindungsgemäßen Verfahrens wird zunächst aus der Anfangsdrehzahl $n_{1n}$ unter Berücksichtigung des Übersetzungssprunges des jeweiligen Gangwechsels die Enddrehzahl $n_{2n}$ ermittelt und alsdann in Abhängigkeit von der Anfangsdrehzahl $n_{1n}$ Drehzahldifferenzwerte $\Delta n_{1nA}$, $\Delta n_{1nE}$ ermittelt. Im Falle Hochschaltung entsprechend Fig. 1 ergibt sich dann der Brennkraftmaschinen-Drehzahlwert $n_{1nA}$ als Differenz der Anfangsdrehzahl $n_{1n}$ und des ersten Drehzahldifferenzwertes $\Delta n_{1nA}$; in entsprechender Weise ergibt sich der zweite Brennkraftmaschinen-Drehzahlwert $n_{1nE}$ durch Addition der Enddrehzahl $n_{2n}$ und des zweiten Drehzahldifferenzwertes $\Delta n_{1nE}$. Dies bedeutet, daß in einem Betriebsfalle, wie er in Fig. 1 dargestellt ist, die Beeinflussung der Brennkraftmaschine dann einsetzt, wenn die Motordrehzahl $n_M$ um einen bestimmten Wert, nämlich den Drehzahldifferenzwert $\Delta n_{1nA}$ abgesunken ist und dann wieder abgebrochen wird, wenn sich die Motordrehzahl $n_M$ der Enddrehzahl $n_{2n}$ um einen bestimmten Wert, nämlich den Drehzahldifferenzwert $\Delta n_{1nE}$ angenähert hat.

Fig. 2 zeigt in entsprechender Weise einen Verlauf 20 der Motordrehzahl $n_M$ für einen Rückschaltvorgang. In diesem Betriebsfalle findet die Umschaltung von einer niedrigeren Anfangsdrehzahl $n_{1n}$ zu einer höheren Enddrehzahl $n_{2n}$ statt. Wie bereits oben ausführlich beschrieben, werden auch bei einem Rückschaltvorgang die Brennkraftmaschinen-Drehzahlwerte $n_{1nA}$ bzw. $n_{1nE}$ für den Beginn bzw. das Ende der Brennkraftmaschinenbeeinflussung bestimmt, woraus sich ein Bereich 23 der Beeinflussung für den Rückschaltvorgang ergibt. Die Brennkraftmaschinen-Drehzahlwerte $n_{1nA}$ bzw. $n_{1nE}$ können dabei wiederum entweder direkt aus der Anfangsdrehzahl $n_{1n}$ bestimmt werden oder es werden Drehzahldifferenzwerte $\delta n'_{1nA}$ bzw. $\delta n'_{1nE}$ in Abhängigkeit von der Anfangsdrehzahl $n_{1n}$ gebildet und die den Brennkraftmaschinen-Drehzahlwerten $n_{1nA}$ bzw. $n_{1nE}$ zugeordneten Punkte 21, 22 durch Addition bzw. Subtraktion in der in Fig. 2 dargestellten Weise gebildet.

Der Punkt 21 ist dabei so gelegt, daß die Beeinflussung der Brennkraftmaschine einsetzt, bevor der Freilauf des Getriebes greift, andererseits jedoch erst so spät einsetzt, daß die Motordrehzahl $n_M$ sich schnell erhöhen kann, um den Synchronpunkt zu erreichen.

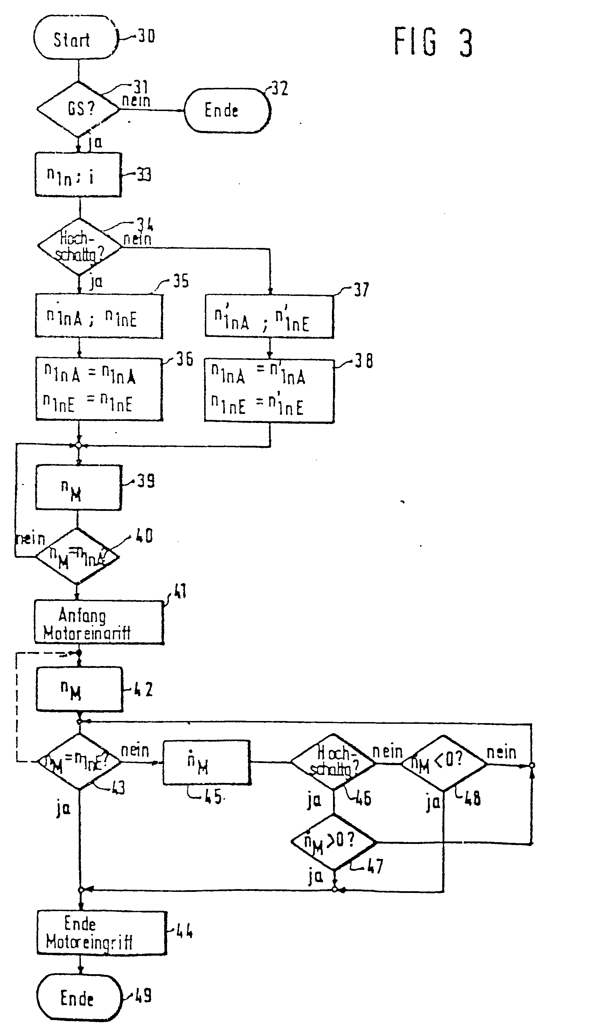

Eine Ausführungsform des erfindungsgemäßen Verfahrens ist anhand eines Flußdiagramms in Fig. 3 dargestellt. Nach Start des Verfahrens wird in einem Block 30 oder einem Block 31 geprüft, ob ein Gangschaltsignal vorliegt. Ist dies nicht der Fall, wird das Verfahren im Block 32 beendet. Liegt jedoch ein Gangschaltbefehl vor, wird die Anfangsdrehzahl $n_{1n}$ sowie der jeweilige Übersetzungssprung i des Stufengetriebes im Block 33 ermittelt. Im Block 34 wird dann geprüft, ob ein Hochschaltvorgang vorliegt. Ist dies der Fall, werden in einem Block 35 die Brennkraftmaschinen-Drehzahlwerte $n_{1nA}$ bzw. $n_{1nE}$ aus einem Speicher in Abhängigkeit von der Anfangsdrehzahl $n_{1n}$ ermittelt und in einem Block 36 diese aus dem Speicher ermittelten Werte als Anfangs- bzw. Endwerte der Beeinflussung der Brennkraftmaschine festgesetzt. Liegt eine Rückschaltung vor, werden in entsprechender Weise Brennkraftmaschinen-Drehzahlwerte $n'_{1nA}$ bzw. $n'_{1nE}$ aus einem Speicher ausgelesen und als Anfangs- bzw. Endwerte der Beeinflussung der Brennkraftmaschine in einem Block 38 festgesetzt. Nun wird einem Block 39 die Motordrehzahl $n_M$ ermittelt und in einem Block 40 überprüft, ob die Motordrehzahl $n_M$ bereits den Brennkraftmaschinen-Drehzahlwert $n_{1nA}$ erreicht hat. Ist dies nicht der Fall, wird die Motordrehzahl $n_M$ im Block 39 erneut ermittelt und im Block 40 überprüft. Hat die Motordrehzahl $n_M$ den Brennkraftmaschinen-Drehzahlwert $n_{1nA}$ erreicht, wird im Block 41 der Beginn des Motoreingriffs ausgelöst. Im Block 42 wird nun die Motordrehzahl $n_M$ erneut ermittelt und im Block 43 überprüft, ob die Motordrehzahl $n_M$ den zweiten Brennkraftmaschinen-Drehzahlwert $n_{1nE}$ erreicht hat. Ist dies nicht der Fall, wird in einer vereinfachten Ausführungsform des erfindungsgemäßen Verfahrens die Motordrehzahl $n_M$ im Block 42 erneut überprüft, wie dies in Fig. 3 durch den gestrichelten Pfeil dargestellt ist. In einer besonders bevorzugten Ausführungsform der Erfindung wird jedoch für den Fall, daß die Überprüfung im Block 43 ein negatives Ergebnis ergibt, also die Beeinflussung der Brennkraftmaschine noch andauert, der Gradient der Motordrehzahl $\dot{n}_M$ überprüft. Dies soll sicherstellen, daß im Falle plötzlichen Gasgebens bzw. Gaswegnehmens während des Schaltvorganges auch bei Nichterreichen des vorgegebenen Brennkraftmaschinen-Drehzahlwertes $n_{1nE}$ die Beeinflussung der Brennkraftmaschine dennoch rechtzeitig beendet wird. Hierzu wird zunächst in einem Block 45 die erste zeitliche Ableitung $\dot{n}_M$ der Motordrehzahl $n_M$ gebildet, sei es als Differenzquotient oder Differentialquotient und nach einer Entscheidung Block 46 ob ein Hochschalt- oder eine Rückschaltvorgang vorliegt, festgestellt, der Motordrehzahl-Gradient $\dot{n}_M$ bei einer Hochschaltung größer als Null ist bzw. bei einer Rückschaltung kleiner als Null ist. Ist dies der Fall, wird die Beeinflussung der Brennkraftmaschine im Block 44 sofort beendet. Ist dies nicht der Fall, wird der Motoreingriff fortgesetzt und die Überprüfung im Block 43 erneut durchgeführt, bis die Motordrehzahl $n_M$ den Brennkraftmaschinen-Drehzahlwert $n_{1nE}$ erreicht hat. In diesem Falle wird ebenfalls der Motoreingriff im Block 44 beendet. Das Verfahren endet dann im Block 49.

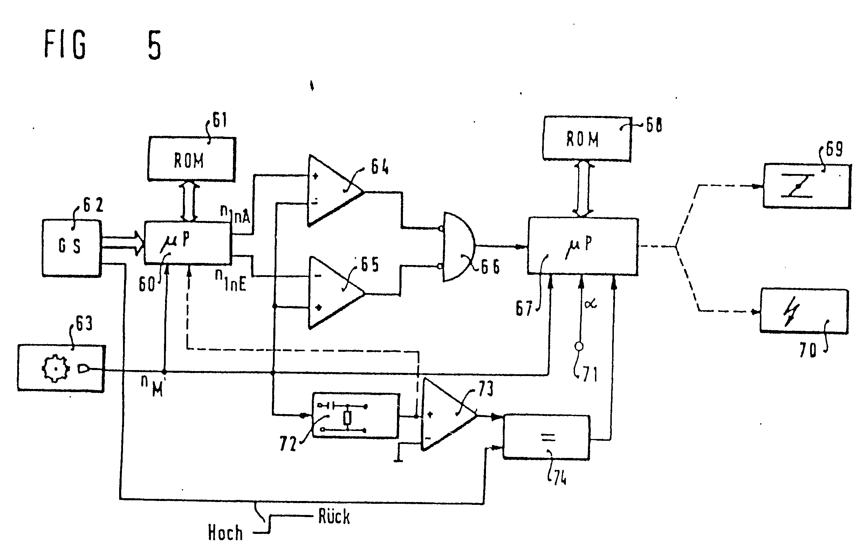

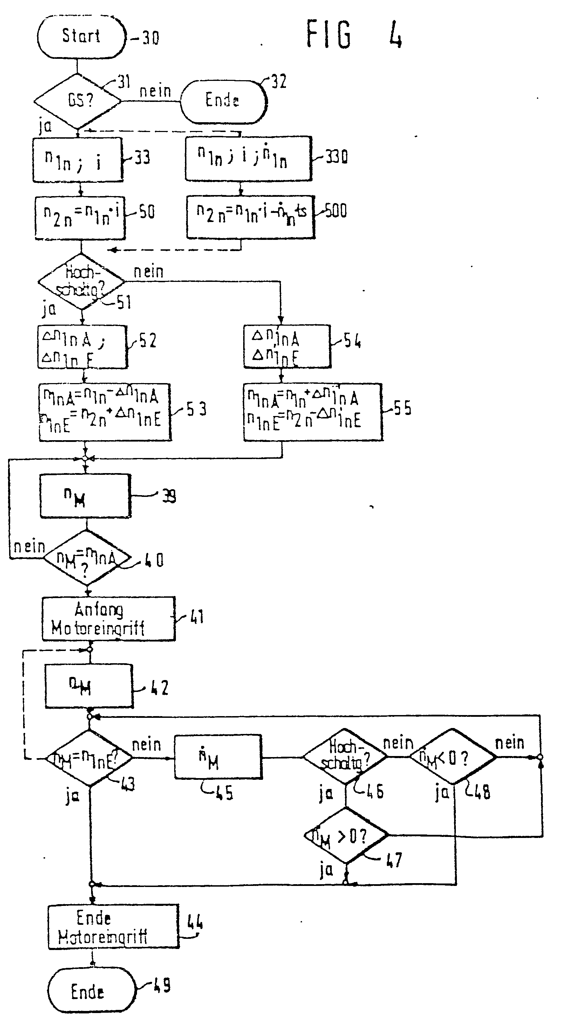

Eine weitere bevorzugte Ausführungsform des erfindungsgemäßen Verfahrens ist anhand eines Flußdiagramms in Fig. 4 dargestellt. Wird im Block 31 festgestellt, daß ein Gangschaltsignal vorliegt, wird bei einer ersten Variante dieser Ausführungsform des erfindungsgemäßen Verfahrens nach Bestimmung der Anfangsdrehzahl $n_{1n}$ sowie des Übersetzungssprunges i die Enddrehzahl $n_{2n}$ durch einfache Multiplikation von Anfangsdrehzahl $n_{1n}$ und Übersetzungssprung i berechnet. In einer zweiten Variante dieser Ausführungsform des erfindungsgemäßen Verfahrens (in Fig. 4 gestrichelt dargestellt) wird zusätzlich die erste zeitliche Ableitung der Motordrehzahl $n_M$ zum Zeitpunkt des Gangschaltsignales, also $\dot{n}_{1n}$ im Block 330 festgestellt.

Im Block 500 wird alsdann die Enddrehzahl $n_{2n}$ nach der Beziehung:

$$n_{2n} = n_{1n} i - \dot{n}_{1n} t_s$$

berechnet, wobei $t_S$ ein Festwert ist und einer mittleren Schaltzeit des Getriebes entspricht. Diese Art der Bestimmung der Enddrehzahl $n_{2n}$ berücksichtigt, daß insbesondere bei langen Schaltzeiten die Fahrzeuggeschwindigkeit nicht als konstant angenommen werden kann und daher bei der Berechnung der Synchrondrehzahl aus den Drehzahlverhältnissen zu Beginn des Gangwechsels die Fahrzeugbeschleunigung berücksichtigt werden muß. Die vorerwähnte Beziehung ergibt sich unter der Annahme, daß die Fahrzeugbeschleunigung konstant bleibt.

Im Block 51 wird nach Hoch- und Rückschaltung unterschieden. Es werden zunächst, je nachdem welche Schaltart vorliegt, der Anfangsdrehzahl $n_{1n}$ zugeordnete Drehzahldifferenzwerte $\Delta n_{1nA}$, $\Delta n_{1nE}$ bzw. für den Rückschaltvorgang $\Delta n'_{1nA}$, $\Delta n'_{1nE}$ in den Blöcken 52 bzw. 54 aus entsprechenden Speichern ermittelt und sodann in den Blöcken 53 bzw. 55 die Brennkraftmaschinen-Drehzahlwerte $n_{1nA}$ bzw. $n_{1nE}$ für den Hochschaltvorgang nach den Beziehungen:

$$n_{1nA} = n_{1n} - \Delta n_{1nA}$$

$$n_{1nE} = n_{2n} + \Delta n_{1nE}$$

und für den Rückschaltvorgang nach den Beziehungen:

$$n_{1nA} = n_{1n} + \Delta n'_{1nA}$$

$$n_{1nE} = n_{2n} - \Delta n'_{1nE}$$

bestimmt. Nachdem die Brennkraftmaschinen-Drehzahlwerte festgelegt sind, läuft das Verfahren in den Blöcken 39ff wie bereits zu Fig. 3 dargelegt, ab.

Fig. 5 zeigt das Blockschaltbild einer Ausführungsform einer Vorrichtung zur Durchführung des erfindungsgemäßen Verfahrens. Ein Drehzahlrechner 60 ist an einen Speicher 61, eine Getriebesteuereinheit 62 sowie einen Motordrehzahl-Geber 63 angeschlossen. Zwei Ausgänge des Drehzahlrechners 60 sind mit Eingängen eines ersten Komparators 64 bzw. eines zweiten Komparators 65 verbunden, deren Ausgänge auf invertierende Eingänge eines UND-Gatters 66 geführt sind, das mit einem Eingang eines Beeinflussungs-Rechners 67, der über einen Speicher 68 verfügt, in Wirkungsverbindung steht. Der Ausgang des Beeinflussungs-Rechners 67 wirkt auf eine Kraftstoffzumessungseinrichtung 69 und/oder eine Zündanlage 70 des Kraftfahrzeuges. Dem Beeinflussungs-Rechner 67 ist weiterhin ein Motordrehzahl-Signal $n_M$ vom Motordrehzahl-Geber 63 sowie ein Motorlastsignal $\alpha$ über eine Klemme 71 zuführbar. Weiterhin ist an dem Motordrehzahl-Geber 63 eine Differenzierstufe 72 angeschlossen, die über einen dritten Komparator 73, dessen weiterer Eingang an Masse angeschlossen ist, mit einem Eingang einer Äquivalenzstufe 74 verbunden ist, deren weiterer Eingang an einen mit einem die Schaltart darstellenden Signal beschaltenden Ausgang der Getriebesteuereinheit 62 angeschlossen ist, wobei der Ausgang der Äquivalenzstufe 74 ebenfalls auf einen Eingang des Beeinflussungs-Rechners 67 geführt ist. Bei einer Variante der in Fig. 5 dargestellten Vorrichtung ist der Ausgang der Differenzierstufe 72 auf einen Eingang des Drehzahlrechners 60 gelegt.

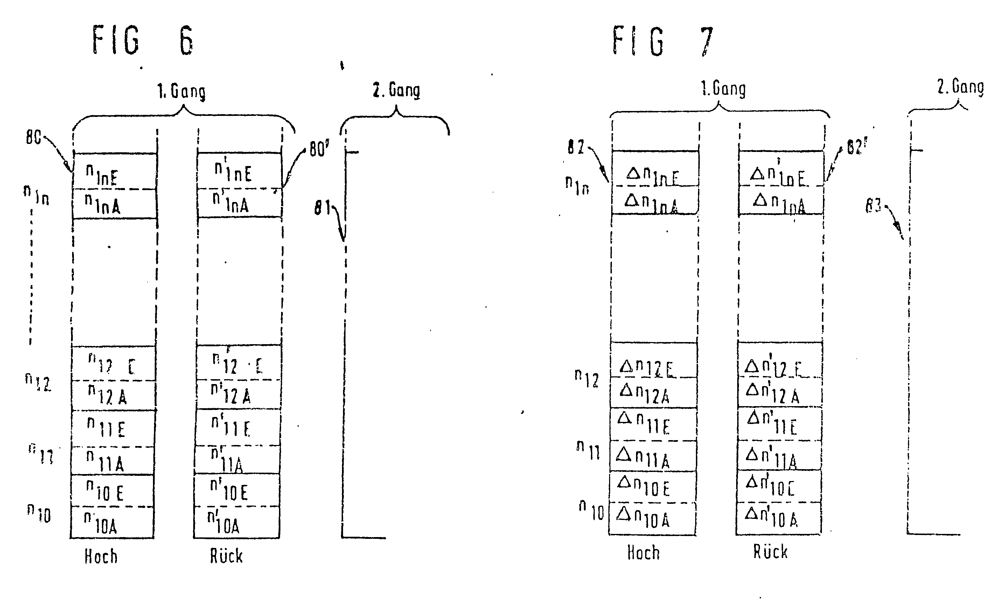

Fig. 6 und 7 zeigen schematische Speicherplatzbelegungen des Speichers 61. In einer ersten Folge von Speicherplätzen 80 sind Brennkraftmaschinen-Drehzahlwerte für eine Hochschaltung aus dem ersten Gang abgespeichert. Entsprechend enthält eine weitere Folge von Speicherplätzen 81 die Brennkraftmaschinen-Drehzahlwerte für eine Hochschaltung aus dem zweiten Gang. Weitere Folgen 80', 81' usf. enthalten die entsprechenden Brennkraftmaschinen-Drehzahlwerte für die jeweils zugehörige Rückschaltung. Die bei Vorliegen eines Gangschaltsignales ermittelte Anfangsdrehzahl $n_{In}$ wird in geeigneter Stufung digitalisiert, so daß sich je nach Betriebszustand Anfangsdrehzahlen $n_{I0}$, $n_{I1}$, $n_{I2}$ ... $n_{In}$ ergeben. Die so ermittelten Anfangsdrehzahlwerte können dabei unmittelbar zur Adressierung der Speicherplätze verwendet werden, auf denen die zugehörigen Brennkraftmaschinen-Drehzahlwerte $n_{I0A}$, $n_{I0E}$; $n_{I1A}$, $n_{I1E}$ ... abgelegt sind. Um eine Zuordnung der Anfangsdrehzahlen $n_{In}$ auch in Abhängigkeit von der Schaltart (Hoch- bzw. Rückschaltung) und dem jeweils eingelegten Gang vornehmen zu können, ist es beispielsweise möglich, die durch die jeweilige Anfangsdrehzahl $n_{In}$ festgelegte Adresse in Abhängigkeit von der Schaltart bzw. dem eingelegten Gang jeweils um einen bestimmten Betrag zu erhöhen. Die Speicherplatzfolge 80 könnte hierzu beispielsweise auf den Speicherplätzen bis 99, die Speicherplatzfolge 80' auf den Speicherplätzen 100 bis 199, die Speicherplatzfolge 81 auf den Speicherplätzen 500 bis 599 angeordnet sein. Bei Vorliegen eines Rückschaltvorganges würde dann die aus der Anfangsdrehzahl $n_{In}$ bestimmte Adresse um den Betrag 100 bzw. bei eingeschaltetem zweiten Gang um den Betrag 500 erhöht. In entsprechender Weise können die Drehzahldifferenzwerte $\Delta n_{InA}$, $\Delta n_{InE}$ in Abhängigkeit von der Schaltart und vom eingelegten Gang auf Speicherplatzfolgen 82, 82', 83 .... abgelegt werden.

Die Funktion der in Fig. 5 dargestellten Vorrichtung ist wie folgt:

Der Adressrechner 60 erhält von der Getriebesteuereinheit 62 sowohl den Gangschaltbefehl wie auch Informationen über die Schaltart sowie den jeweils eingelegten Gang. Das vom Motordrehzahl-Geber 63 herrührende Motordrehzahl-Signal $n_M$ wird zum Zeitpunkt des Eintreffens des Gangschaltsignales festgehalten und dient als Anfangsdrehzahl $n_{In}$. In Abhängigkeit von dieser Anfangsdrehzahl $n_{In}$ werden nun aus dem Speicher 61 in der oben beschriebenen Weise die Brennkraftmaschinen-Drehzahlwerte $n_{InA}$, $n_{InE}$ bei Verwendung des Verfahrens entsprechend Fig. 3 direkt ausgelesen und auf Eingänge des ersten und zweiten Komparators 64, 65 gegeben, deren weitere Eingänge mit dem Motordrehzahl-Signal $n_M$ geschaltet sind. Im Drehzahlrechner 60 werden somit die Verfahrensschritte entsprechend Fig. 3 der Blöcke 30 bis 36 bzw. 38 vorgenommen. Die Komparatoren 64, 65 bestimmen Anfang und Ende der Beeinflussung der Brennkraftmaschine entsprechend den Blöcken 40, 43 aus Fig. 3. Der Ausgang des UND-Gatters 66 liegt nur dann auf logisch 1, wenn sich die Motordrehzahl in einem der Bereiche 13 bzw. 23 entsprechend Fig. 1 bzw. 2 befindet. Durch dieses Signal wird der Beeinflussungsrechner 67 in Betrieb gesetzt und ermittelt in Abhängigkeit von der Motordrehzahl $n_M$ sowie der Motorlast $\lambda$ aus dem Speicher 68 den jeweils erforderlichen Betrag der Beeinflussung der Brennkraftmaschine. Die so ermittelte Stellgröße wird in der Kraftstoffzumessungseinrichtung 69 und/oder der Zündanlage 70 aufgeschaltet. Die Überwachung des Gradienten $\dot{n}_M$ der Motordrehzahl $n_M$ während der Beeinflussung der Brennkraftmaschine entsprechend den Blöcken 45 bis 48 aus Fig. 3, 4 wird durch die Bausteine 72, 73, 74 realisiert. Im Differenzierglied 72 wird die erste zeitliche Ableitung $\dot{n}_M$ der Motordrehzahl $n_M$ gebildet und im dritten Komparator 73 mit Nullpotential verglichen. Das Ausgangssignal des dritten Komparators 73 wird in der Äquivalenzstufe 74 mit einem von der Getriebesteuereinheit 62 kommenden Signal verglichen, das bei Vorliegen einer Hochschaltung den Pegel logisch Null und bei Vorliegen einer Rückschaltung den Pegel logisch 1 hat. Dies bewirkt, daß am Ausgang der Äquivalenzstufe 74 dann ein Signal logisch 1 anliegt, wenn entweder bei einer Hochschaltung die Steigung des Motordrehzahlgradienten positiv oder bei einer Rückschaltung negativ ist und somit die Beeinflussung der Brennkraftmaschine beendet werden muß. Bei Verwendung des Verfahrens nach Fig. 4 werden aus dem Speicher 61 in den Drehzahlrechner 60 die Drehzahldifferenzwerte $\Delta n_{InA}$, $\Delta n_{InE}$ ausgelesen, wie dies in Fig. 7 schematisch dargestellt ist. Mit Hilfe der oben angegebenen Beziehungen werden nun die Brennkraftmaschinen-Drehzahlwerte $n_{InA}$ und $n_{InE}$ je nach Schaltart und eingelegtem Gang berechnet. Zwar bedeutet es Mehraufwand, zunächst die Enddrehzahl entsprechend der Synchrondrehzahl zu berechnen und die Brennkraftmaschinen-Drehzahlwerte durch Addition bzw. Subtraktion der Drehzahldifferenzwerte von der Anfangs- bzw. Enddrehzahl zu ermitteln, die Einführung der Zwischengröße »Enddrehzahl« eröffnet jedoch die Möglichkeit, wie oben ausgeführt, diese Enddrehzahl, falls erforderlich, beschleunigungsabhängig zu korrigieren, wie dies in den Blöcken 330, 500 in Fig. 4 dargestellt ist. Bei Verwendung dieses Verfahrens ist es daher erforderlich, dem Drehzahlrechner 60 ein in der ersten zeitlichen Ableitung $\dot{n}_M$ der Motordrehzahl $n_M$ entsprechendes Signal zuzuführen, wie dies durch die gestrichelte Linie in Fig. 5 angedeutet ist.

**Patentansprüche**

1. Verfahren zur Beeinflussung einer Brennkraftmaschine eines Kraftfahrzeugantriebes beim Gangwechsel eines Stufengetriebes, dadurch gekennzeichnet, daß in Abhängigkeit von der Drehzahl ($n_{In}$) der Brennkraftmaschine bei Einleitung des Gangwechsels Brennkraftmaschinen-Drehzahlwerte ($n_{InA}$, $n_{InE}$) bestimmt werden, bei deren Erreichen die Beeinflussung der Brennkraftmaschine begonnen bzw. beendet wird.

2. Verfahren nach Anspruch 1, dadurch gekennzeichnet, daß die Brennkraftmaschine durch Verstellung der Kraftstoffzufuhr beeinflußt wird.

3. Verfahren nach Anspruch 1, dadurch gekennzeichnet, daß die Brennkraftmaschine durch Verstellung der Zündung oeeinflußt wird.

4. Verfahren nach einem der vorhergehenden Ansprüche, dadurch gekennzeichnet, daß die Brennkraftmaschinen-Drehzahlwerte ($n_{1nA}$, $n_{1nE}$) weiterhin abhängig von der Schaltart (Last-Schub, Hoch-Rück) eingestellt werden.

5. Verfahren nach einem der vorhergehenden Ansprüche, dadurch gekennzeichnet, daß die Brennkraftmaschinen-Drehzahlwerte ($n_{1nA}$, $n_{1nE}$) weiterhin abhängig vom eingelegten Gang eingestellt werden.

6. Verfahren nach einem der vorhergehenden Ansprüche, dadurch gekennzeichnet, daß die Enddrehzahl ($n_{2n}$) der Brennkraftmaschine nach vollzogenem Gangwechsel aus der Anfangsdrehzahl ($n_{1n}$) bei Einleitung des Gangwechsels und dem Übersetzungssprung (i) zwischen altem und neuem Gang ermittelt wird, daß Drehzahldifferenzwerte ($\Delta n_{1nA}$; $\Delta n_{1nE}$) festgelegt werden und die Brennkraftmaschinen-Drehzahlwerte ($n_{1nA}$, $n_{1nE}$) durch Kombination von Anfangs- bzw. Enddrehzahl und den Drehzahldifferenzwerten bestimmt werden.

7. Verfahren nach Anspruch 6, dadurch gekennzeichnet, daß die Enddrehzahl ($n_{2n}$) der Brennkraftmaschine aus der Anfangsdrehzahl ($n_{1n}$) dem Übersetzungssprung (i), der ersten zeitlichen Ableitung ($\dot{n}_{1n}$), der Anfangsdrehzahl ($n_{1n}$) und einer vorgegebenen Schaltzeit ($t_S$) nach der Beziehung:

$$n_{2n} = n_{1n}\, i - \dot{n}_{1n}\, t_S$$

gebildet wird.

8. Verfahren nach einem der vorhergehenden Ansprüche, dadurch gekennzeichnet, daß während der Beeinflussung der Brennkraftmaschine die erste zeitliche Ableitung ($\dot{n}_M$) der Motordrehzahl ($n_M$) überwacht und die Beeinflussung dann abgebrochen wird, wenn bei Hochschaltung diese erste zeitliche Ableitung größer als Null und bei Rückschaltung kleiner als Null ist.

9. Verfahren nach einem der vorhergehenden Ansprüche, dadurch gekennzeichnet, daß der Betrag der Beeinflussung der Brennkraftmaschine abhängig von der Motordrehzahl ($n_M$) und dem Lastzustand ($\alpha$) der Brennkraftmaschine eingestellt wird.

10. Vorrichtung zur Durchführung des Verfahrens nach einem der vorhergehenden Ansprüche, dadurch gekennzeichnet, daß ein mit einem Speicher (61) verbundener Drehzahlrechner (60) vorgesehen ist, der weiterhin zur Übermittlung von Betriebsparametern an einen Motordrehzahl-Geber (63) und eine Getriebesteuereinheit (62) angeschlossen ist und in Abhängigkeit von den eingegebenen Betriebsparametern unter Zuhilfenahme von im Speicher (61) abgelegten Kennwerten die Brennkraftmaschinen-Drehzahlwerte ($n_{1nA}$, $n_{1nE}$) ermittelt, daß an dem Ausgang des Drehzahlrechners (60) Schaltmittel (64, 65, 66) zum Vergleich der Brennkraftmaschinen-Drehzahlwerte ($n_{1nA}$, $n_{1nE}$) mit der Motordrehzahl ($n_M$) angeschlossen sind, die mit einem Beeinflussungs-Rechner (67) in Wirkungsverbindung stehen, der mit einer Kraftstoffzumessungsvorrichtung (69) und/oder einer Zündanlage (70) des Kraftfahrzeuges verbunden ist.

11. Vorrichtung nach Anspruch 10 zur Durchführung des Verfahrens nach Anspruch 8 oder 9, dadurch gekennzeichnet, daß an dem Motordrehzahl-Geber (63) eine Differenzierstufe (72) angeschlossen ist, die über einen Komparator (73) mit einem Eingang einer Äquivalenzstufe (74) verbunden ist, deren weiterer Eingang an einem mit einem die Schaltart darstellenden Signal beschalteten Ausgang der Getriebesteuereinheit (62) angeschlossen ist und daß der Ausgang der Äquivalenzstufe (74) mit einem eine Unterbrechung der Beeinflussung der Brennkraftmaschine bewirkenden Eingang des Beeinflussungs-Rechner (67) verbunden ist.

## Claims

1. A method of influencing a combustion engine of a motor vehicle drive during gear changing of a step-by-step transmission, characterised in that, combustion engine speed values ($n_{1nA}$, $n_{1nE}$), on the attainment of which the influencing of the combustion engine is commenced or terminated, are determined in accordance with the speed ($n_{1n}$) of the combustion engine during initiation of the gear change.

2. A method according to claim 1, characterised in that, the combustion engine is influenced by adjusting the fuel supply.

3. A method according to claim 1, characterised in that, the combustion engine is influenced by adjusting the ignition.

4. A method according to one of the preceding claims, characterised in that, the combustion engine speed values ($n_{1nA}$, $n_{1nE}$) are furthermore adjusted in accordance with the type of change (load on-load off, change up-change down).

5. A method according to one of the preceding claims, characterised in that, the combustion engine speed values ($n_{1nA}$, $n_{1nE}$) are furthermore adjusted in accordance with the selected gear.

6. A method according to one of the preceding claims, characterised in that, the final speed ($n_{2n}$) of the combustion engine after the gear change is completed is determined from the initial speed ($n_{1n}$) on initiation of the gear change and the jump in transmission ratio (i) between the old and the new gear, that speed difference values ($\Delta n_{1nA}$; $\Delta n_{1nE}$) are established and the combustion engine speed values ($n_{1nA}$, $n_{1nE}$) are determined by combining the initial or final speed and the speed difference values.

7. A method according to claim 6, characterised in that, the final speed ($n_{2n}$) of the

combustion engine is derived from the initial speed ($\dot{n}_{1n}$) the jump in transmission ration (i), the first temporal differentiation ($\dot{n}_{1n}$), the initial speed ($n_{1n}$) and a predetermined gear changing time ($t_S$) according to the relationship:

$$n_{2n} = n_{1n}\, i - \dot{n}_{1n}\, t_S$$

8. A method according to one of the preceding claims, characterised in that, during the influencing of the combustion engine, the first temporal differentiation ($\dot{n}_M$) of the engine speed ($n_M$) is monitored and the influencing is interrupted when, on changing up, the said first temporal differentiation is greater than zero and on changing down is less than zero.

9. A method according to one of the preceding claims, characterised in that, the degree of influencing of the combustion engine is adjusted in accordance with the engine speed ($n_M$) and the load condition ($\alpha$) on the combustion engine.

10. Apparatus for carryingout the method according to one of the preceding claims, characterised in that, a speed computer (60) associated with a store (61) is provided, which, furthermore, is connected to an engine speed sensor (63) and a transmission control unit (62) for the determination of operating parameters and determines the combustion speed values ($n_{1nA}$, $n_{1nE}$) in accordance with the inserted operating parameters with the aid of the nominal values entered in the store (61), that switching means (64, 65, 66) for comparing the combustion engine speed values ($n_{1nA}$, $n_{1nE}$) with the engine speed ($n_M$) are connected to the output from the speed computer (60) and are in operative communication with an influencing computer (67) which is connected to a fuel metering device (69) and/or an ignition system (70) for the motor vehicle.

11. Apparatus according to claim 10 for carryingout the method according to claim 8 or 9, characterised in that, a differentiating stage (72) is connected to the engine speed sensor (63) and is connected through a comparator (73) to one input to an equivalence stage (74) the further input to which is connected to one output from the transmission control unit (62) which is connected to a signal representing the type of gear change and that the output from the equivalence stage (74) is connected to an input to the influencing computer (67), producing an interruption of the influencing of the combustion engine.

**Revendications**

1. Procédé pour influencer un moteur à combustion interne d'une commande de véhicule automobile lors du changement de vitesse d'une boîte de vitesses à étages, caractérisé en ce qu'en fonction de la vitesse de rotation ($n_{1n}$) du moteur à combustion interne, on détermine lors du déclenchement du changement de vitesse des valeurs ($n_{1nA}$, $n_{1nE}$) de la vitesse de rotation du moteur à combustion interne, l'influence exercée sur le moteur à combustion interne commençant et s'arrêtant respectivement lorsque ces valeurs sont atteintes.

2. Procédé selon la revendication 1, caractérisé en ce qu'on exerce une influence sur le moteur à combustion interne en réglant l'amenée du carburant.

3. Procédé selon la revendication 1, caractérisé en ce qu'on exerce une influence sur le moteur à combustion interne en réglant l'allumage.

4. Procédé selon l'une des revendications précédentes, caractérisé en ce qu'on règle en outre les valeurs ($n_{1nA}$, $n_{1nE}$) de la vitesse de rotation du moteur à combustion interne en fonction du type de manoeuvre (en charge-frein moteur, ascendante-rétrograde).

5. Procédé selon l'une des revendications précédentes, caractérisé en ce qu'on règle en outre les valeurs ($n_{1nA}$, $n_{1nE}$) de la vitesse de rotation du moteur à combustion interne en fonction de la vitesse passée.

6. Procédé selon l'une des revendications précédentes, caractérise en ce qu'on détermine la vitesse de rotation finale ($n_{2n}$) du moteur à combustion interne après le déroulement du changement de vitesse à partir de la vitesse de rotation initiale ($n_{1n}$) lors du déclenchement du changement de vitesse et du saut de transmission (i) entre l'ancienne et la nouvelle vitesse, en ce qu'on fixe des valeurs de différence de vitesse de rotation ($\Delta n_{1nA}$, $\Delta n_{1nE}$) et on détermine les valeurs ($n_{1nA}$, $n_{1nE}$) de la vitesse de rotation du moteur à combustion interne par combinaison respective de la vitesse de rotation initiale, de la vitesse de rotation finale et des valeurs de différence de vitesse de rotation.

7. Procédé selon la revendication 6, caractérisé en ce qu'on forme la vitesse de rotation finale ($n_{2n}$) du moteur à combustion interne à partir de la vitesse de rotation initiale ($n_{1n}$), du saut de transmission (i), de la dérivée première en fonction du temps ($\dot{n}_{1n}$) de la vitesse de rotation initiale ($n_{1n}$) et d'un temps de manoeuvre prédéterminé ($t_S$) suivant la relation:

$$n_{2n} = n_{1n}\, i - \dot{n}_{1n}\, t_S.$$

8. Procédé selon l'une des revendications précédentes, caractérisé en ce que pendant l'influence exercée sur le moteur à combustion interne, on contrôle la dérivée première ($\dot{n}_m$) de la vitesse de rotation ($n_m$) du moteur, et l'influence est interrompue lorsque la dérivée première est supérieure à zéro lors d'une manoeuvre ascendante et inférieure à zéro lors d'une manoeuvre rétrograde.

9. Procédé selon l'une des revendications précédentes, caractérisé en ce qu'on règle l'importance de l'influence exercée sur le moteur à combustion interne en fonction de la vitesse de rotation ($n_m$) du moteur et de l'état de charge ($\alpha$) du moteur à combustion interne.

10. Installation pour la mise en application du procédé suivant l'une des revendications précédentes, caractérisé en ce qu'il est prévu une calculatrice de vitesse de rotation (60) reliée à une mémoire (61), cette calculatrice étant, en outre, pour transmettre des paramètres de fonctionnement, raccordée à un capteur (63) de la vitesse de rotation du moteur et à une unité de commande (62) de bôite de vitesses, et on détermine les valeurs ($n_{1nA}$, $n_{1nE}$) de la vitesse de rotation du moteur à combustion interne en fonction des paramètres de fonctionnement introduits, à l'aide des valeurs caractéristiques déposées dans la mémoire (61), en ce qu'à la sortie de la calculatrice de vitesse de rotation (60) sont raccordés des organes de commutation (64, 65, 66) pour comparer les valeurs ($n_{1nA}$, $n_{1nE}$) de la vitesse de rotation du moteur à combustion interne à la vitesse de rotation ($n_m$) du moteur, ces organes étant es liaison de fonctionnement avec une calculatrice d'influence (67) reliée à un dispositif de dosagede carburant (69) et/ou à une installation d'allumage (70) du véhicule automobile.

11. Installation selon la revendication 10, pour la mise en application du procédé selon la revendication 8 ou la revendication 9, caractérisé en ce qu'un étage de différentiation (72) est raccordé au capteur (63) de la vitesse de rotation du moteur, cet étage étant relié par l'intermédiaire d'un comparateur (73) à une entrée d'un étage d'équivalence (74) dont l'autre entrée est raccordée à une sortie de l'unité de commande de boîte de vitesses (62) reliée au signal représentant le type de manoeuvre, et en ce que la sortie de l'étage d'équivalence (74) est reliée à une entrée de la calculatrice d'influence (67) provoquant une interruption de l'influence exercée sur le moteur à combustion interne.

## FIG 1

$n_M$

$n_{1n}$

$\Delta n_{1nA}$

10

11

$n_{1nA}$

Hochschaltung

12

$n_{1nE}$

$\Delta n_{1nE}$

$n_{2n}$

$t_0$

13

$t$

## FIG 2

$n_M$

22

21

$n_{1nE}$

$n_{2n}$

Rückschaltung

$n_{1nA}$

$\Delta n_{1nE}'$

20

$\Delta n_{1nA}'$

$n_{1n}$

$t_0$

23

$t$

FIG 3

Start —30

GS? —31  nein → Ende —32

ja

$n_{1n} ; i$ —33

Hoch-schaltg? —34  nein

ja

$n_{1nA} ; n_{1nE}$ —35   $n'_{1nA} ; n'_{1nE}$ —37

$n_{1nA} = n_{1nA}$  —36   $n_{1nA} = n'_{1nA}$ —38
$n_{1nE} = n_{1nE}$       $n_{1nE} = n'_{1nE}$

$n_M$ —39

nein   $n_M = n_{1nA}$ —40

Anfang Motoreingriff —41

$n_M$ —42

$n_M = n_{1nE}$? —43   nein →   $\dot{n}_M$ —45   Hoch-schaltg? —46  nein →  $n_M < 0$? —48  nein

ja                                            ja                                ja

$n_M > 0$? —47

ja

Ende Motoreingriff —44

Ende —49

FIG 5

FIG 4

## FIG 6

1. Gang      2. Gang

80    80'

81

| Hoch | Rück |
|---|---|
| $n_{1nE}$ | $n'_{1nE}$ |
| $n_{1nA}$ | $n'_{1nA}$ |
| $n_{12E}$ | $n'_{12E}$ |
| $n_{12A}$ | $n'_{12A}$ |
| $n_{11E}$ | $n'_{11E}$ |
| $n_{11A}$ | $n'_{11A}$ |
| $n_{10E}$ | $n'_{10E}$ |
| $n_{10A}$ | $n'_{10A}$ |

$n_{1n}$

$n_{12}$

$n_{11}$

$n_{10}$

## FIG 7

1. Gang      2. Gang

82    82'

83

| Hoch | Rück |
|---|---|
| $\Delta n_{1nE}$ | $\Delta n'_{1nE}$ |
| $\Delta n_{1nA}$ | $\Delta n'_{1nA}$ |
| $\Delta n_{12E}$ | $\Delta n'_{12E}$ |
| $\Delta n_{12A}$ | $\Delta n'_{12A}$ |
| $\Delta n_{11E}$ | $\Delta n'_{11E}$ |
| $\Delta n_{11A}$ | $\Delta n'_{11A}$ |
| $\Delta n_{10E}$ | $\Delta n'_{10E}$ |
| $\Delta n_{10A}$ | $\Delta n'_{10A}$ |

$n_{1n}$

$n_{12}$

$n_{11}$

$n_{10}$

0 011 088